# FASCICULE DE BREVET EUROPEEN

(11) **EP 3 832 687 B1**
(45) Date de publication et mention de la délivrance du brevet: **02.07.2025**
(21) Numéro de dépôt: 20204582.9
(22) Date de dépôt: 29.10.2020
(51) Int. Cl.: H01H 71/12, H01H 9/50, H02H 1/00, H01H 71/10, H01H 9/30

(54) **ENSEMBLE D'APPAREILS DE PROTECTION ÉLECTRIQUES À DEUX NIVEAUX CONNECTÉS EN SÉRIE**
IN REIHE GESCHALTETE ZWEISTUFIGE ELEKTRISCHE SCHUTZVORRICHTUNGEN
SET OF ELECTRICAL PROTECTION DEVICES WITH TWO LEVELS THAT ARE CONNECTED IN SERIES

(30) Priorité: 05.12.2019 FR 1913809
(43) Date de publication de la demande: 09.06.2021
(73) Titulaire: Schneider Electric Industries SAS, 92500 Rueil-Malmaison (FR)
(72) Inventeur: RIVAL, Marc, 38000 Grenoble (FR); LISNYAK, Marina, 38000 Grenoble (FR)
(74) Mandataire: Schneider Electric

(56) Documents cités:
- EP-A1- 0 872 939
- EP-B1- 0 872 939
- FR-A1- 3 069 951
- US-A1- 2014 055 886

## Description

### DOMAINE TECHNIQUE

La présente invention concerne un ensemble d'appareils de protection électriques à deux niveaux connectés en série, le premier niveau comportant un disjoncteur dit premier ou disjoncteur amont, le deuxième niveau comportant un ou plusieurs disjoncteurs dits seconds ou disjoncteurs aval, montés en parallèle l'un par rapport à l'autre, les disjoncteurs aval présentant un calibre moins élevé que le premier disjoncteur, chaque disjoncteur comportant pour chacune des phases, un bloc de coupure traversé par une ligne de courant sur laquelle sont placés deux contacts séparables ainsi qu'un capteur de mesure du courant, des moyens d'actionnement manuel ou télécommandé des contacts, des moyens d'ouverture automatique des contacts commandés par un déclencheur, ledit déclencheur étant commandé par le capteur de courant précité, et comportant des moyens pour régler la courbe de déclenchement long retard en temps inverse ainsi que la courbe de déclenchement court retard avec un temps de non déclenchement, le déclencheurs des disjoncteurs dits seconds comportant en outre des moyens de protection dits instantanée permettant l'actionnement du déclencheur associé à ces disjoncteurs dits seconds lorsque le courant atteint un seuil dit seuil DIN de déclenchement instantané de ces seconds disjoncteurs.

### ETAT DE LA TECHNIQUE ANTERIEURE

On connaît de tels ensembles d'appareils de protection électrique permettant d'assurer simultanément trois fonctions respectivement, la performance de coupure extrême par filiation entre les deux étages d'appareils de coupure basse tension, une sélectivité totale entre ces deux étages, et une protection ultra rapide de l'étage supérieur en cas de défaut intermédiaire entre les deux étages.

Or, ces trois fonctions sont difficilement compatibles à un niveau de performance correspondant à celui qu'il est nécessaire d'atteindre dans les systèmes d'appareils de coupure basse tension destinés principalement aux tableaux d'auxiliaire des bateaux de très forte puissance en basse tension, typiquement des puissances supérieures à 100 KA et 690 V.

En règle générale, les techniques de filiation et de sélectivité sont souvent incompatibles pour des valeurs de courant importantes avec des tensions supérieures à 525V.

Le document FR 3 069 951 décrit un ensemble d'appareils de protection électriques comportant les caractéristiques du préambule de la revendication 1.

La présente invention résout ces problèmes et propose un ensemble d'appareils de protection électriques basse tension destiné à être utilisé dans des applications de très forte puissance en basse tension, de manière à assurer à la fois une performance de coupure extrême par filiation, une sélectivité totale, et une protection ultra rapide de l'étage supérieure en cas de défaut intermédiaire entre les deux étages.

### EXPOSE DE L'INVENTION

A cet effet, la présente invention a pour objet un ensemble d'appareils de protection électriques selon la revendication 1.

Selon une caractéristique particulière, le ou chaque déclencheur comporte des moyens pour régler la courbe de déclenchement long retard en temps inverse pour les courants inférieurs à sensiblement 10 fois le courant nominal In, ainsi que des moyens pour régler la courbe de déclenchement court retard, avec un temps de non déclenchement de 20ms, pour les courants d'une valeur comprise entre 1,5 et 10 fois le courant nominal.

Selon une autre caractéristique, les disjoncteurs sont des disjoncteurs limiteurs.

Selon une autre caractéristique, la valeur de courant et le seuil prédéterminés précités sont respectivement de 10 fois le courant nominal In et 8000lux.

Selon une autre caractéristique, le disjoncteur-limiteur dit premier présente un calibre compris entre 800 et 1000A, tandis que le(les) disjoncteur-limiteurs dits second(s) présente(nt) un calibre compris entre 40A et 250A.

Selon une autre caractéristique, le disjoncteur dit premier présente un calibre de 800A, tandis que le disjoncteur dit second présente un calibre de 100A.

Selon une autre caractéristique, la valeur du seuil de déclenchement instantané des seconds disjoncteurs est d'environ 11 kArms.

Selon une autre caractéristique, le disjoncteur amont précité comporte un propulseur pyrotechnique destiné à permettre un déclenchement ultra-rapide en présence d'un défaut d'amorçage entre phases dans la zone située entre les deux étages.

Selon une autre caractéristique, le capteur optique précité comporte une fibre optique discriminante, ladite fibre optique comportant une fibre en verre fluoré comportant à ses extrémités, un traitement destiné à bloquer les ondes supérieures à 450 nm.

La présente invention a encore pour objet un ensemble d'appareils électriques à deux niveaux, caractérisé en ce qu'il est utilisé dans des tableaux d'auxiliaires de bateaux de puissance supérieures à 100KA/690V

Mais d'autres avantages et caractéristiques de l'invention apparaîtront mieux dans la description détaillée qui suit et se réfère aux dessins annexés donnés uniquement à titre d'exemples et dans lesquels :

### BREVE DESCRIPTION DES DESSINS

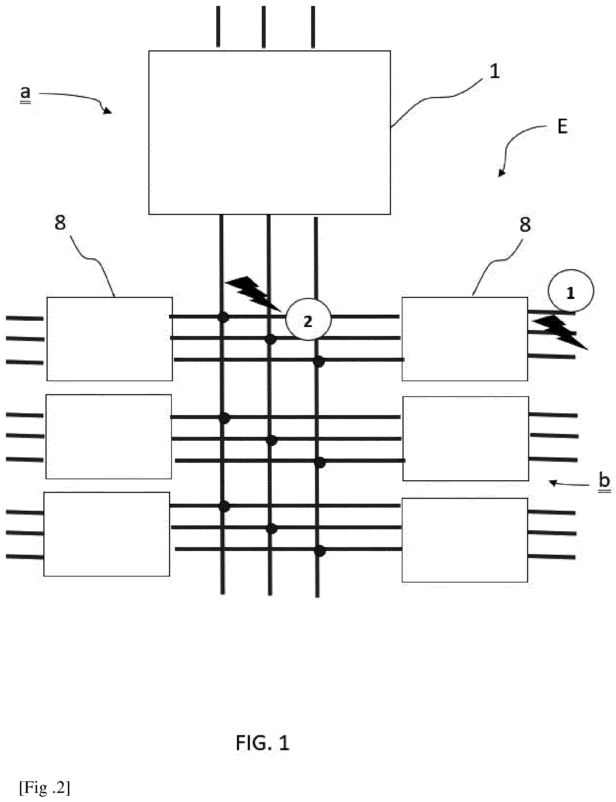

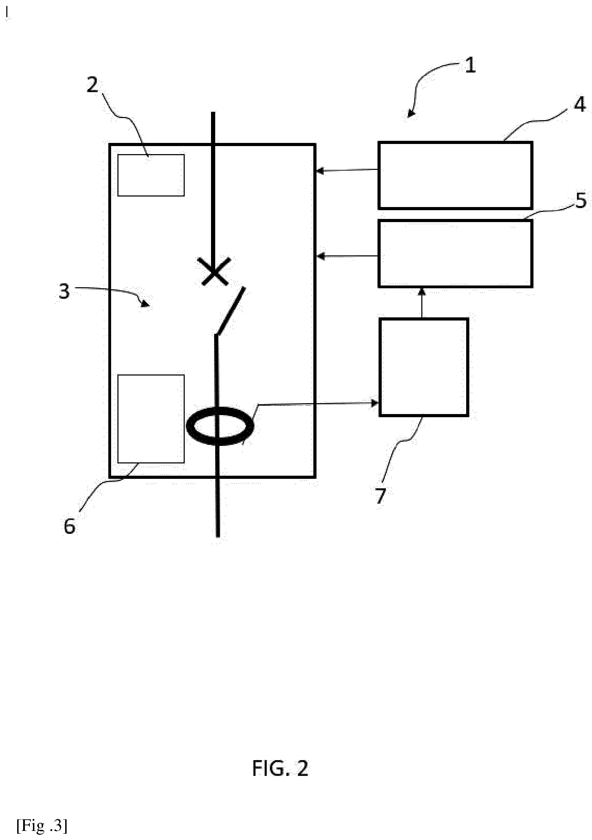

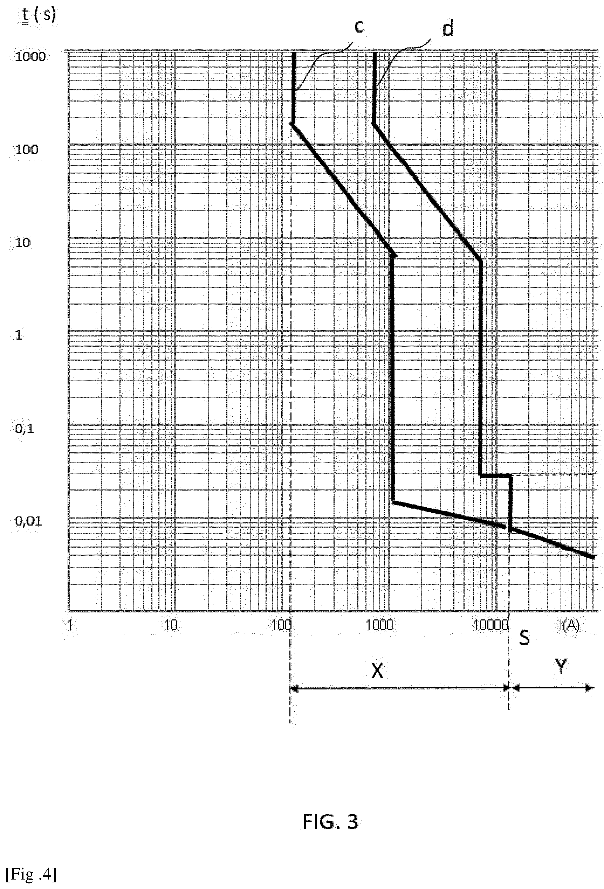

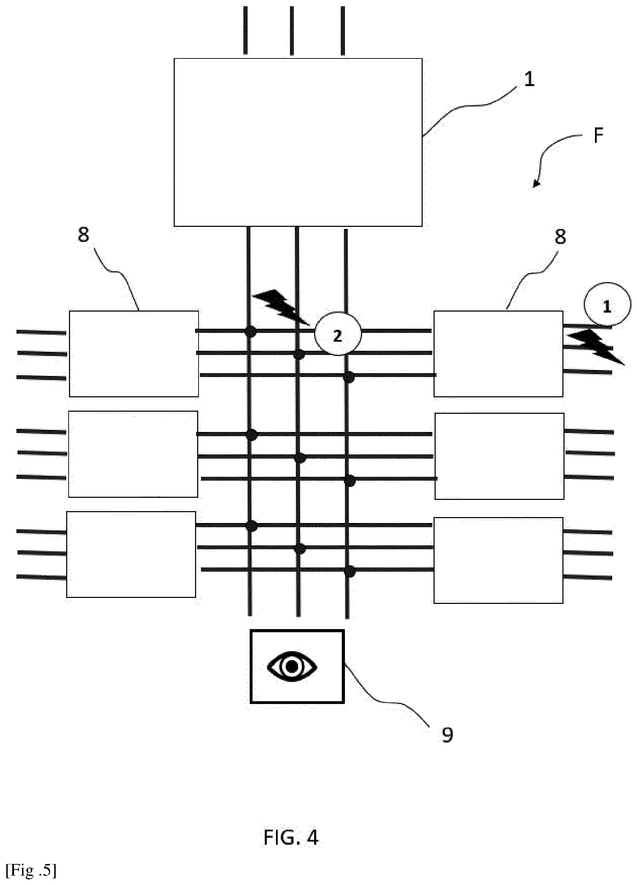

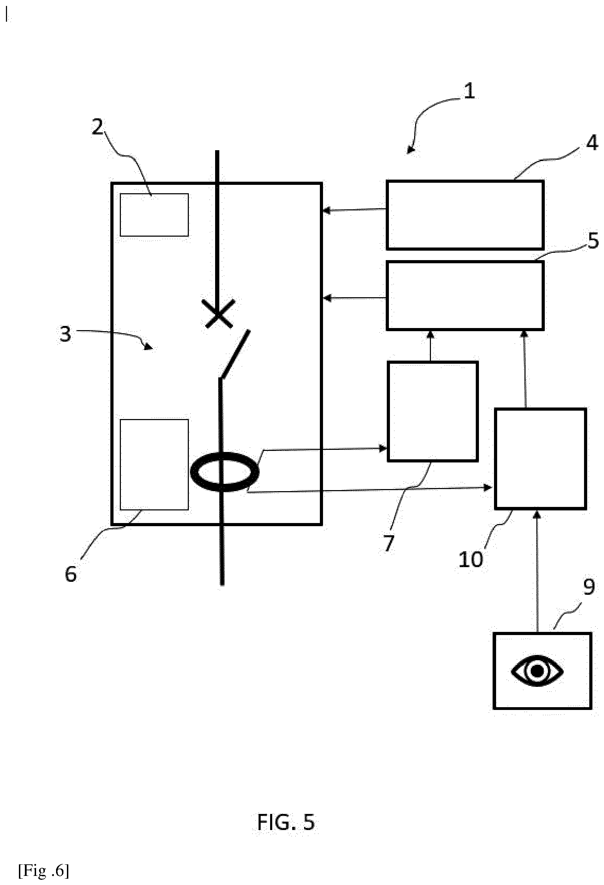

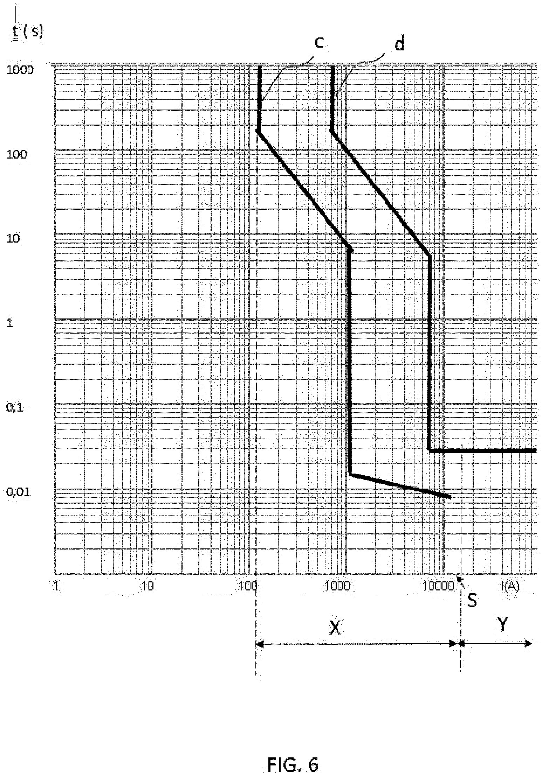

[Fig .1] - La figure 1 est une représentation d'un schéma électrique illustrant un ensemble d'appareils électriques à deux niveaux basse tension selon l'art antérieur,
[Fig .2] - La figure 2 est un diagramme fonctionnel illustrant un disjoncteur électronique appartenant à un ensemble d'appareils selon l'art antérieur,
[Fig .3] - La figure 3 est une représentation graphique illustrant deux courbes de déclenchement correspondant respectivement à celles de deux disjoncteurs respectivement amont et aval appartenant à l'ensemble d'appareils selon l'art antérieur précité,
[Fig .4] - La figure 4 est une représentation d'un schéma électrique illustrant un ensemble d'appareils électriques basse tension selon une réalisation particulière de l'invention,
[Fig .5] - La figure 5 est un diagramme fonctionnel illustrant un disjoncteur électronique appartenant à un ensemble d'appareils selon une réalisation particulière de l'invention, et
[Fig .6] - La figure 6 est une représentation graphique illustrant deux courbes de déclenchement correspondant respectivement à celles de deux disjoncteurs respectivement amont et aval, appartenant à l'ensemble d'appareils selon la réalisation précitée de l'invention.

### DESCRIPTION D'UN MODE PARTICULIER DE REALISATION DE L'INVENTION

Sur la figure 1, on voit un ensemble E d'appareils électriques basse tension, ou système d'appareils, comportant deux niveaux a,b connectés en série, selon l'art antérieur.

Cet ensemble E comporte un disjoncteur limiteur 1, dit disjoncteur amont ou premier, présentant un calibre avantageusement de 800 A et comportant tel qu'illustré sur la figure 2, un bloc de coupure 2 comportant un mécanisme 3 de coupure des contacts du disjoncteur, un mécanisme 4 d'actionnement manuel ou télécommandé des contacts du disjoncteur, un mécanisme 5 de déclenchement du type à bobine électro-magnétique, un capteur de courant 6 par phase, un déclencheur électronique 7 permettant de régler la courbe de déclenchement long retard en temps inverse pour les courants inférieurs à, avantageusement, dix fois le courant nominal In, de régler la courbe de déclenchement court retard, avec un temps de non déclenchement de, avantageusement, 20ms, pour les courants compris entre, avantageusement, 1,5 fois et 10 fois le courant nominal, et des moyens de protection instantanés intégrés au disjoncteur et présentant un seuil fixe de, avantageusement, 22kÂ (11kA rms).

Cet ensemble d'appareils E comporte également un ou plusieurs disjoncteurs limiteur dit(s) aval ou seconds 8, montés en parallèle l'un par rapport à l'autre, ces disjoncteur-limiteurs 8 étant montés en série avec le disjoncteur-limiteur amont précité 1.

Ces disjoncteurs limiteurs dit(s) aval 8, présentent un calibre compris avantageusement entre 40A et 250A, et comportent de la même manière que pour les disjoncteurs amont 1, une partie de coupure de type limiteur, un mécanisme d'actionnement manuel ou télécommandé, un mécanisme de déclenchement comportant une bobine électromagnétique, un capteur de courant par phase, un déclencheur électronique, et des moyens de protection instantanés intégrés, non réglables, présentant un seuil fixe de, avantageusement, 3000A.

Le fonctionnement d'un tel disjoncteur selon l'art antérieur va être décrit dans ce qui suit en référence aux figures 1 à 3.

Sur la figure 3, la représentation graphique illustre les deux courbes de déclenchement c,d respectivement des deux disjoncteurs amont et aval, avec en ordonnée le temps T, en secondes, de déclenchement, et en abscisse, le courant I, en ampères, traversant le circuit sur lequel sont placés les ensembles de disjoncteurs.

On traitera tout d'abord le cas de l'apparition d'un défaut en position 1 sur la figure 1, c'est-à-dire en aval du disjoncteur dit second 8.

Dans la zone X, illustrée sur la figure 3, le courant traversé par l'appareil est inférieur au seuil DIN du premier disjoncteur 1. Seul le second disjoncteur 8 déclenche, grâce à la sélectivité chronométrique due à la temporisation de 20ms associée au premier disjoncteur 1, ce qui a pour conséquence que c'est le second disjoncteur 8 qui déclenche en premier.

Dans la zone Y, la valeur du courant est supérieure au seuil DIN, c'est-à-dire au seuil de déclenchement instantané S du premier disjoncteur 1, les deux disjoncteurs 1,8 déclenchent, il y a filiation lorsque la performance coupée est supérieure à la performance de coupure maximum du second disjoncteur 8. Il n'y a pas de sélectivité car le disjoncteur amont 1 a déclenché.

On rappellera que la sélectivité est la coordination des dispositifs de coupure automatique pour qu'un défaut survenant en un point quelconque du réseau soit éliminé par le disjoncteur placé immédiatement en amont du défaut, et par lui seul. La filiation est la technique qui consiste à augmenter le pouvoir de coupure d'un disjoncteur en le coordonnant avec un autre dispositif de protection placé en amont.

On traitera maintenant le cas de l'apparition d'un défaut de court-circuit élevé en position 2, c'est-à-dire en aval du premier disjoncteur 1 et en amont du second disjoncteur 8.

Dans ce cas, le disjoncteur limiteur dit premier 1 limite le courant par répulsion des contacts, et son déclencheur est activé dès que la valeur du courant dépasse le seuil DIN du déclencheur instantané. La bobine de déclenchement est activée, commande l'ouverture du mécanisme, et confirme l'ouverture des contacts principaux.

Sur la figure 4, a été représenté un ensemble F d'appareils selon une réalisation particulière de l'invention.

Cet ensemble d'appareils selon l'invention comporte, comme dans l'art antérieur, un premier disjoncteur limiteur 1, dit disjoncteur amont, et plusieurs disjoncteurs limiteur dits seconds ou disjoncteurs aval 8, montés en parallèle l'un par rapport à l'autre, ce ou ces disjoncteurs dits seconds 8 étant placés en série par rapport au premier disjoncteur 1.

Les seconds disjoncteurs 8 sont constitués de la même manière que dans l'art antérieur.

Tel qu'illustré plus particulièrement sur la figure 5, le disjoncteur amont 1 selon l'invention comporte, outre les éléments déjà présents dans le disjoncteur amont selon l'art antérieur, un capteur optique discriminant 9 apte à commander une unité de contrôle additionnelle 10, cette unité 10 étant apte d'une part, à recevoir des informations en provenance du capteur de mesure du courant 6 appartenant au bloc de coupure 2, et d'autre part, à commander la bobine d'ouverture du mécanisme de déclenchement 5 des contacts du disjoncteur dit premier 1.

Ainsi, de par les moyens techniques énumérés précédemment, le déclencheur de ce premier disjoncteur 1 se distingue de celui de l'art antérieur en ce qu'il se décompose en une première et une seconde chaîne de déclenchement. La première chaîne de déclenchement comporte des moyens pour régler la courbe de déclenchement long retard en temps inverse pour les courants inférieurs à 10 fois le courant nominal In, pour régler la courbe de déclenchement court retard avec un temps de non déclenchement de, avantageusement, 20ms réglable de, avantageusement, 1,5 à 10 fois le courant nominal. Cette première chaîne de déclenchement ne comporte pas de moyens de protection instantanés intégrés présentant un seuil fixe.

La seconde chaîne de déclenchement comporte des moyens pour mesurer simultanément le niveau de courant et de seuil maximum de lumière émise par le capteur optique 6, lequel capteur discriminant la lumière comprise entre 300 et 450 nm en éliminant les lumières de type visible et infra rouge de manière à ne prendre en compte que la lumière émise par l'arc sur le jeu de barres et à éliminer la lumière caractéristique de jets de gaz émis par les disjoncteurs basse tension lors d'une coupure.

Le fonctionnement d'un tel ensemble d'appareils va être décrit dans ce qui suit en référence aux figures 4 à 6.

On traitera tout d'abord le cas de l'apparition d'un défaut en position 1, tel qu'illustré sur la figure 4, c'est-à-dire en aval du disjoncteur dit second 8,

Dans une zone X, telle que définie sur la figure 6, correspondant à une valeur de courant inférieure au seuil DIN S du premier disjoncteur limiteur 1, seul le second disjoncteur 8 déclenche, il y a tout comme dans l'art antérieur, sélectivité chronométrique.

Dans la zone Y, la valeur du courant est supérieure au seuil DIN S du premier disjoncteur limiteur 1. Dans ce cas, seul le disjoncteur dit second 8 déclenche. De la même manière que dans l'art antérieur, il y filiation lorsque la performance coupée est supérieure à la performance de coupure maximum du second disjoncteur 8 grâce à l'aide de la répulsion des contacts du bloc de coupure 2 du disjoncteur dit premier 1.

Dans ce cas, il y a sélectivité entre les deux disjoncteurs, car le premier disjoncteur 1 n'a pas déclenché d'une part, car ce premier disjoncteur 1 ne comporte pas de moyens de déclenchement dits instantanés, et d'autre part, car le capteur de lumière 9 a éliminé la lumière générée par l'échappement des gaz de coupure en provenance du disjoncteur aval 8. En effet, du fait de cette élimination, la seconde chaîne de déclenchement du disjoncteur amont 1 n'a pas entraîné le déclenchement du disjoncteur amont 1 par le fait que la mesure de lumière effectuée par l'unité de contrôle additionnelle 10 n'a pas dépassé la valeur seuil. En effet, lors d'un défaut en aval du second disjoncteur 8, ce disjoncteur, en interrompant le courant émet, via les jets de gaz ionisés sortant par les échappements, de la lumière dans le visible et l'infra-rouge, ceci correspondant à une longueur d'onde supérieure à 450nm. Si le capteur de lumière était actif pour ces valeurs de longueur d'onde, la sélectivité ne serait pas assurée. Le disjoncteur dit premier 1 serait ouvert par l'activation du capteur optique 9 et de la mesure du courant.

On étudiera maintenant le cas de l'apparition d'un défaut de court-circuit élevé en position 2 sur la figure 4, c'est-à-dire en aval du premier disjoncteur 1 et en amont du second disjoncteur 8. Dans ce cas, le disjoncteur limiteur dit premier 1 limite le courant par répulsion et la première chaîne de déclenchement de son déclencheur 7 est activée lorsque la lumière est supérieure à 8000 lux et la valeur du courant supérieure à une valeur prédéterminée, par exemple de 10In, c'est à dire dix fois le courant nominal In. La bobine de l'actionneur principal est activée, commande l'ouverture du mécanisme, et confirme l'ouverture des contacts principaux. Il y a autoprotection du disjoncteur en cas de défaut.

On notera que le disjoncteur dit second 8 étant un appareil de type limiteur, sa tenue électrodynamique est basse (environ 15 fois le courant nominal). Ceci est indispensable pour que celui-ci puisse aider à la coupure au plus tôt lors des essais de coupure aux performances supérieures aux courants de court-circuit que peut supporter seul le disjoncteur aval, lequel est aussi de type limiteur.

Ainsi, on peut répartir l'énergie de coupure entre les deux disjoncteurs en série 1,8. La valeur du seuil de déclenchement instantané S est fixée à une valeur légèrement inférieure à la tenue électrodynamique afin d'assurer une autoprotection du disjoncteur. Lorsque le courant est supérieur à la tenue électrodynamique, celui-ci doit déclencher instantanément, par exemple avant 10ms.

On notera que selon une autre réalisation, le disjoncteur limiteur dit aval 8 peut être un disjoncteur de technologie magnétothermique sans partie électronique.

On notera également que ce capteur optique 9 sera avantageusement couplé à un propulseur pyrotechnique, agissant seulement en cas de défaut d'amorçage entre phase dans la zone localisée entre les deux niveaux.

Ainsi, selon l'invention, le disjoncteur limiteur amont 1 est équipé d'une double chaîne de déclenchement. Une première chaîne de déclenchement protège contre les courants de surcharge jusqu'à 10 fois le courant nominal, environ 12 kÂ pour un IN de 800A, avec une temporisation de 20ms pour cette valeur dite instantanée, 20ms étant supérieure au temps de coupure du disjoncteur aval 8 à ce niveau de performance de 12kA RMS. Une deuxième chaîne de déclenchement activée par une mesure de courant supérieure à 10In et une mesure de lumière d'un capteur optique bloquant les longueurs d'onde supérieures à 450nm, ces longueurs étant caractéristiques des jets de gaz émis par les disjoncteurs basse tension lors d'une coupure.

Grâce à cette double chaîne de déclenchement, nous obtenons pour un défaut apparaissant en position 1, d'une part, une performance de coupure extrême par filiation entre les deux étages d'appareils de coupure basse tension, par coopération des deux ensembles de coupure, et d'autre part, une sélectivité totale entre ces deux étages, caractérisée par un non déclenchement du disjoncteur amont.

Pour un défaut apparaissant en position 2, nous obtenons une protection ultra rapide de l'étage supérieure et du jeu de barres associé, grâce à la deuxième chaine de déclenchement.

Ceci est réalisé en produisant des manifestations extérieures très modérées, par une meilleure absorption et une meilleure répartition de l'énergie de coupure entre les deux étages.

Pour obtenir une protection ultra rapide lors d'un défaut interne survenant entre les deux étages de l'installation, le disjoncteur amont 1 peut être équipé avantageusement d'un propulseur pyrotechnique, agissant uniquement en cas de défaut d'amorçage entre les phases dans la zone située entre les deux étages. On notera que dans le cas d'un tableau du type dit « à arête de poisson » tel qu'illustré sur la figure 4, un seul capteur optique discriminant est nécessaire. Il sera positionné à l'opposé du disjoncteur amont, à la hauteur des barres verticales se raccordant à l'appareil amont et sur laquelle viennent se raccorder les appareils aval de calibre inférieur. En effet, si un arc naît sur les barres verticales, les forces électrodynamiques pousseront l'arc à l'opposé du transformateur.

On notera que le capteur optique discriminant pourra être remplacé par une fibre optique discriminante, c'est-à-dire une fibre en verre fluoré avec un traitement aux extrémités bloquant les ondes supérieures à 450nm.

L'invention s'applique avantageusement aux systèmes d'appareils de coupure basse tension destinés principalement aux tableaux d'auxiliaires des bateaux de très forte puissance en basse tension, typiquement pour des puissances supérieures à 100 KA 690V. En effet, pour les installations critiques comme les bateaux, il est fondamental d'assurer la sélectivité entre les différents étages. Un incident sur une charge ne doit pas rendre inopérante les autres charges.

Mais, elle peut être appliquée avantageusement à tous les domaines exigeant ce niveau de performance simultanée en filiation et sélectivité, par exemple dans le domaine des énergies renouvelables, avec des performances de plus en plus accrues.

Ce système comprenant deux étages connectés en série, permet d'assurer simultanément trois fonctions difficilement compatibles à ce niveau de performance, à savoir une performance de coupure extrême par filiation entre les deux étages d'appareils, une sélectivité totale entre les deux étages, et une protection ultrarapide de l'étage supérieure en cas de défaut intermédiaire entre les deux étages.

## Revendications

1. Ensemble d'appareils de protection électrique à deux niveaux connectés en série, le premier niveau comportant un disjoncteur (1) dit premier ou disjoncteur amont, le deuxième niveau comportant un ou plusieurs disjoncteurs seconds (8) ou disjoncteurs aval, montés en parallèle l'un par rapport à l'autre, chaque disjoncteur comportant pour chacune des phases, un bloc de coupure traversé par une ligne de courant sur laquelle sont placés deux contacts séparables ainsi qu'un capteur de mesure du courant, des moyens d'actionnement manuel ou télécommandé des contacts, des moyens d'ouverture automatique des contacts commandés par un déclencheur, ledit déclencheur étant commandé par le capteur de courant précité, le déclencheur des disjoncteurs seconds (8) comportant en outre des moyens de protection dits instantanée permettant l'actionnement du déclencheur associé à ces disjoncteurs seconds (8) lorsque le courant atteint un seuil dit seuil DIN de déclenchement instantané de ces seconds disjoncteurs (8),
**caractérisé en ce que** le déclencheur (7) du disjoncteur amont (1) ne comporte pas de moyens de protection dits instantanés mais comporte d'une part, une première chaîne de déclenchement permettant de régler la courbe de déclenchement long retard en temps inverse, ainsi que la courbe de déclenchement court retard avec un temps de non déclenchement, et d'autre part, une seconde chaîne de déclenchement comportant un capteur optique (9) apte à discriminer la lumière comprise entre 300 et 450 nm en éliminant les lumières de type visible et infra rouge, de manière à éliminer la lumière caractéristique de jets de gaz émis par les disjoncteurs aval (8) lors d'une coupure, et des moyens pour mesurer simultanément le niveau de courant et le seuil maximum de lumière émise au niveau des jeux de barres, cette deuxième chaîne de déclenchement étant apte à entraîner le déclenchement du disjoncteur amont (1) lorsque le courant dépasse une valeur prédéterminée et la lumière émise dépasse un seuil prédéterminé de lumière émise, et **en ce que** les disjoncteurs aval (8) présentent un calibre moins élevé que le premier disjoncteur (1), et tous les déclencheurs comportent des moyens pour régler la courbe de déclenchement long retard en temps inverse ainsi que la courbe de déclenchement court retard avec un temps de non déclenchement.

2. Ensemble d'appareils de protection électrique selon la revendication 1, **caractérisé en ce que** le ou chaque déclencheur (7) comporte des moyens pour régler la courbe de déclenchement long retard en temps inverse pour les courants inférieurs à sensiblement 10 fois le courant nominal In, ainsi que des moyens pour régler la courbe de déclenchement court retard, avec un temps de non déclenchement de 20ms, pour les courants d'une valeur comprise entre 1,5 et 10 fois le courant nominal.

3. Ensemble d'appareils de protection électrique selon la revendication 1 ou 2, **caractérisé en ce que** les disjoncteurs (1,8) sont des disjoncteurs limiteurs.

4. Ensemble d'appareils de protection électrique selon la revendication 3, **caractérisé en ce que** la valeur de courant et le seuil prédéterminés précités sont respectivement de 10 fois le courant nominal In et 8000lux.

5. Ensemble d'appareils de protection électrique selon la revendication 3 ou 4, **caractérisé en ce que** le disjoncteur limiteur premier (1) présente un calibre compris entre 800 et 1000A, tandis que les disjoncteurs limiteurs seconds (8) présentent un calibre compris entre 40A et 250A.

6. Ensemble d'appareils de protection électrique selon l'une quelconque des revendications précédentes, **caractérisé en ce que** le disjoncteur premier (1) présente un calibre de 800A, tandis que le disjoncteur second (8) présente un calibre de 100A.

7. Ensemble d'appareils de protection électrique selon l'une quelconque des revendications précédentes, **caractérisé en ce que** la valeur du seuil de déclenchement instantané S des seconds disjoncteurs (8) est d'environ 11kArms.

8. Ensemble d'appareils de protection électrique selon l'une quelconque des revendications précédentes, **caractérisé en ce que** le disjoncteur amont précité (1) comporte un propulseur pyrotechnique destiné à permettre un déclenchement ultra- rapide en présence d'un défaut d'amorçage entre phases dans la zone située entre les deux étages.

9. Ensemble d'appareils de protection électrique selon l'une quelconque des revendications précédentes, **caractérisé en ce que** le capteur optique précité (9) comporte une fibre optique discriminante, ladite fibre optique comportant une fibre en verre fluoré comportant à ses extrémités, un traitement destiné à bloquer les ondes supérieures à 450 nm.

10. Ensemble d'appareils de protection électrique selon l'une quelconque des revendications précédentes, **caractérisé en ce qu'**il est utilisé dans des tableaux d'auxiliaires de bateaux de puissance supérieures à 100KA/690V.

## Patentansprüche

1. Anordnung von elektrischen Schutzgeräten mit zwei Ebenen, die in Reihe geschaltet sind, wobei die erste Ebene einen Leistungsschalter (1), erster oder vorgeordneter Leistungsschalter genannt, umfasst, wobei die zweite Ebene einen oder mehrere zweite Leistungsschalter (8) oder nachgeordnete Leistungsschalter umfasst, die parallel zueinander montiert sind, wobei jeder Leistungsschalter für jede der Phasen eine Schalteinheit, die von einer Stromleitung durchquert wird, an der zwei trennbare Kontakte sowie ein Sensor zum Messen des Stroms angeordnet sind, Mittel zur manuellen oder ferngesteuerten Betätigung der Kontakte, durch einen Auslöser gesteuerte Mittel zum automatischen Öffnen der Kontakte umfasst, wobei der Auslöser durch den vorgenannten Stromsensor gesteuert wird, wobei der Auslöser der zweiten Leistungsschalter (8) ferner sogenannte Sofortschutzmittel umfasst, die das Betätigen des diesen zweiten Leistungsschaltern (8) zugeordneten Auslösers ermöglichen, wenn der Strom einen Schwellenwert, DIN-Schwellenwert genannt, zum sofortigen Auslösen dieser zweiten Leistungsschalter (8) erreicht,
**dadurch gekennzeichnet, dass** der Auslöser (7) des vorgeordneten Leistungsschalters (1) keine sogenannten Sofortschutzmittel umfasst, sondern zum einen eine erste Auslösekette umfasst, die es ermöglicht, die Kennlinie der abhängig langzeitverzögerten Auslösung sowie die Kennlinie der kurzzeitverzögerten Auslösung mit einer Nichtauslösezeit einzustellen, und zum anderen eine zweite Auslösekette, die einen optischen Sensor (9) umfasst, der geeignet ist, das Licht zwischen 300 und 450 nm zu unterscheiden, indem sichtbares und Infrarot-Licht eliminiert werden, so dass das charakteristische Licht von Gasstrahlen, die von den nachgeordneten Leistungsschalter (8) bei einem Schalten emittiert werden, eliminiert wird, und Mittel zum gleichzeitigen Messen der Stromebene und des maximalen Schwellenwerts des auf Ebene der Sammelschienen emittierten Lichts, wobei diese zweite Auslösekette geeignet ist, das Auslösen des vorgeordneten Leistungsschalters (1) zu bewirken, wenn der Strom einen vorbestimmten Wert überschreitet und das emittierte Licht einen vorgestimmten Schwellenwert für das emittierte Licht überschreitet, und dadurch, dass die nachgeordneten Leistungsschalter (8) ein weniger hohes Kaliber als der erste Leistungsschalter (1) aufweisen und alle Auslöser Mittel zum Einstellen der Kennlinie der abhängig langzeitverzögerten Auslösung sowie der Kennlinie der kurzzeitverzögerten Auslösung mit einer Nichtauslösezeit umfassen.

2. Anordnung von elektrischen Schutzgeräten nach Anspruch 1, **dadurch gekennzeichnet, dass** der oder jeder Auslöser (7) Mittel zum Einstellen der Kennlinie der abhängig langzeitverzögerten Auslösung für die Ströme, die weniger als im Wesentlichen das 10-Fache des Nennstroms In betragen, sowie Mittel zum Einstellen der Kennlinie der kurzzeitverzögerten Auslösung mit einer Nichtauslösezeit von 20 ms für Ströme mit einem Wert zwischen dem 1,5- und dem 10-Fachen des Nennstroms umfasst.

3. Anordnung von elektrischen Schutzgeräten nach Anspruch 1 oder 2, **dadurch gekennzeichnet, dass** die Leistungsschalter (1,8) begrenzende Leistungsschalter sind.

4. Anordnung von elektrischen Schutzgeräten nach Anspruch 3, **dadurch gekennzeichnet, dass** der vorgenannte vorbestimmte Stromwert und der vorgenannte vorbestimmte Schwellenwert das 10-Fache des Nennstroms In beziehungsweise 8000 Lux betragen.

5. Anordnung von elektrischen Schutzgeräten nach Anspruch 3 oder 4, **dadurch gekennzeichnet, dass** der erste begrenzende Leistungsschalter (1) ein Kaliber zwischen 800 und 1000 A aufweist, während die zweiten begrenzenden Leistungsschalter (8) ein Kaliber zwischen 40 A und 250 A aufweisen.

6. Anordnung von elektrischen Schutzgeräten nach einem der vorhergehenden Ansprüche, **dadurch gekennzeichnet, dass** der erste Leistungsschalter (1) ein Kaliber von 800 A aufweist, während der zweite Leistungsschalter (8) ein Kaliber von 100 A aufweist.

7. Anordnung von elektrischen Schutzgeräten nach einem der vorhergehenden Ansprüche, **dadurch gekennzeichnet, dass** der Wert des Sofortauslöseschwellenwerts S der zweiten Leistungsschalter (8) ungefähr 11 kArms beträgt.

8. Anordnung von elektrischen Schutzgeräten nach einem der vorhergehenden Ansprüche, **dadurch gekennzeichnet, dass** der vorgenannte vorgeordnete Leistungsschalter (1) eine pyrotechnische Treibladung umfasst, die dazu bestimmt ist, ein ultraschnelles Auslösen bei Vorliegen eines Zündfehlers zwischen Phasen in dem zwischen den beiden Stufen gelegenen Bereich zu ermöglichen.

9. Anordnung von elektrischen Schutzgeräten nach einem der vorhergehenden Ansprüche, **dadurch gekennzeichnet, dass** der vorgenannte optische Sensor (9) eine unterscheidende optische Faser umfasst, wobei die optische Faser eine Faser aus fluoriertem Glas umfasst, die an ihren Enden eine Behandlung umfasst, die dazu bestimmt ist, Wellen oberhalb von 450 nm zu blockieren.

10. Anordnung von elektrischen Schutzgeräten nach einem der vorhergehenden Ansprüche, **dadurch gekennzeichnet, dass** sie in Hilfsgerätetafeln von Schiffen mit einer Leistung von mehr als 100 kA/690 V verwendet wird.

## Claims

1. Set of electrical protection devices with two levels that are connected in series, the first level including a circuit breaker (1) that is referred to as the first or upstream circuit breaker and the second level including one or more second circuit breakers (8) or downstream circuit breakers, which are connected in parallel with respect to one another, each circuit breaker including, for each of the phases, a switching block through which passes a current line on which two separable contacts and a sensor for measuring the current are placed, means for actuating the contacts manually or by remote control, means for automatically opening the contacts controlled by a trip, said trip being controlled by the aforementioned current sensor, the trip of the second circuit breakers (8) further including what are referred to as instantaneous protection means allowing the trip associated with these second circuit breakers (8) to be actuated when the current reaches what is referred to as an instantaneous trip **DIN** threshold of these second circuit breakers (8),
**characterized in that** the trip (7) for the upstream circuit breaker (1), instead of including what are referred to as instantaneous protection means, includes, firstly, a first trip chain making it possible to adjust the long-delay trip curve for inverse time and the short-delay trip curve with a no-trip time and, secondly, a second trip chain including an optical sensor (9) that is capable of discerning light between 300 and 450 nm by eliminating visible and infrared light so as to eliminate the light that is characteristic of gas jets emitted by the downstream circuit breakers (8) during a switching operation, and means for simultaneously measuring the current level and the maximum threshold of light emitted at the busbars, this second trip chain being capable of causing the upstream circuit breaker (1) to trip when the current exceeds a predetermined value and the light emitted exceeds a predetermined threshold for emitted light, and **in that** the downstream circuit breakers (8) have a lower rating than the first circuit breaker (1), and all the trips include means for adjusting the long-delay trip curve for inverse time and the short-delay trip curve with a no-trip time.

2. Set of electrical protection devices according to Claim 1, **characterized in that** the or each trip (7) includes means for adjusting the long-delay trip curve for inverse time for currents smaller than substantially 10 times the nominal current **In** and means for adjusting the short-delay trip curve with a no-trip time of 20 ms for currents with a value of between 1.5 and 10 times the nominal current.

3. Set of electrical protection devices according to Claim 1 or 2, **characterized in that** the circuit breakers (1, 8) are limiting circuit breakers.

4. Set of electrical protection devices according to Claim 3, **characterized in that** the aforementioned predetermined current value and threshold are 10 times the nominal current In and 8000 lux, respectively.

5. Set of electrical protection devices according to Claim 3 or 4, **characterized in that** the first limiting circuit breaker (1) has a rating of between 800 and 1000 A, while the second limiting circuit breakers (8) have a rating of between 40 A and 250 A.

6. Set of electrical protection devices according to any one of the preceding claims, **characterized in that** the first circuit breaker (1) has a rating of 800 A, while the second circuit breaker (8) has a rating of 100 A.

7. Set of electrical protection devices according to any one of the preceding claims, **characterized in that** the value of the instantaneous trip threshold S of the second circuit breakers (8) is around 11 kArms.

8. Set of electrical protection devices according to any one of the preceding claims, **characterized in that** the aforementioned upstream circuit breaker (1) includes a pyrotechnic propellant that is intended to allow an ultra-fast trip in the presence of a sparkover fault between phases in the region located between the two stages.

9. Set of electrical protection devices according to any one of the preceding claims, **characterized in that** the aforementioned optical sensor (9) includes a discriminating optical fibre, said optical fibre including a fibre made of fluoride glass including, at its ends, a treatment that is intended to block waves that are longer than 450 nm.

10. Set of electrical protection devices according to any one of the preceding claims, **characterized in that** it is used in auxiliary switchboards of ships with a power of higher than 100 KA/690 V.
